# EUROPÄISCHE PATENTANMELDUNG

(11) **EP 2 790 001 A2**
(43) Veröffentlichungstag der Anmeldung: **15.10.2014**
(21) Anmeldenummer: 14164149.8
(22) Anmeldetag: 10.04.2014
(51) Int. Cl.: G01M 3/18, G01M 3/24

(54) **Verfahren zum Aktualisieren eines Rohrnetzplanes**

(30) Priorität: 11.04.2013 DE 102013006222
(71) Anmelder: Niss, Karin, 23701 Eutin (DE)
(72) Erfinder:
(74) Vertreter: Lobemeier, Martin Landolf

(57) **Zusammenfassung**

Verfahren zum Aktualisieren eines Rohrnetzplanes, insbesondere Fernwärmenetzplanes, also eines Planes, in dem das Netz von ein Fluid führenden, mit einer thermischen Isolation umgebenen und mit wenigstens einem eine Messstrecke bildenden Sensordraht versehenen Rohren aufgezeichnet ist, wobei über den Sensordraht eine Leckstelle im Rohr mittels einer Messung des Widerstandes des Sensordrahtes zum Rohr, der Spannungsverhältnisse oder mittels Messung der Laufzeit eines auf den Sensordraht aufgegebenen und von einer Schadstelle reflektierten Impulses ermittelt werden kann, gekennzeichnet durch die Schritte: Vorsehen eines bei Betätigung den Widerstand des Sensordrahtes zum Rohr herabsetzenden Schalters an einem definierten Ort der Messstrecke, Betätigen des Schalters in regelmäßigen Zeitabständen, Messen des Widerstandes bzw. der Spannungsverhältnisse und/ oder Messen der Laufzeit eines auf den Sensordraht aufgegebenen Impulses bei betätigtem Schalter, Feststellen einer eine Toleranzschwelle übersteigenden Änderung des Widerstandwerts bzw. der Laufzeit zwischen aufeinanderfolgenden Messungen, Ermitteln der Ursache der festgestellten Änderung, Beseitigen einer auf einem Fehler beruhenden Ursache der Änderung, und Aktualisieren des Rohrnetzplanes unter Vermerken einer nicht zu beseitigenden Ursache.

## Beschreibung

Die Erfindung betrifft ein Verfahren zum Aktualisieren eines Rohrnetzplanes, insbesondere eines Fernwärmenetzplanes.

Es ist allgemein üblich, zu überwachende Rohrnetze, die ein thermisch zu isolierendes Fluid führen, auf Leckagen zu überprüfen. Zu diesem Zweck wird ein Sensordraht in der thermischen Isolation des Rohres verlegt, der Widerstand zwischen dem Sensordraht und dem Rohr oder die Spannungsverhältnisse werden gemessen oder ein Impuls wird auf den Sensordraht aufgegeben. Eine Verringerung des Widerstands zwischen Sensordraht und Rohr bzw. eine Verkürzung der Laufzeit des reflektierten Impulses geben einen Hinweis auf eine Schadstelle.

Eine zuverlässige Ortung eines Fehlers in einem derartigen Rohrnetz ist aber nur dann möglich, wenn ein Rohrnetzplan vorliegt, also ein Plan, der den Verlauf der verlegten Rohre und damit die Messtrecken wiedergibt, vorliegt, damit aus der Verringerung des Widerstandes bzw. einer Verkürzung der Laufzeit auf den Ort der Schadstelle rückgeschlossen werden kann. Bei einer Änderung des Rohrnetzes ist der Plan entsprechende zu aktualisieren.

Es stellt sich dabei jedoch das Problem, dass diese Aktualisierung, die eine Benachrichtigung des Planführers voraussetzt, beispielsweise bei Vorsehung eines weiteren Hausanschlusses gelegentlich unterbleibt, so dass auf die Richtigkeit des ermittelten Orts einer Schadstelle kein Verlass ist.

Zur Art und Weise der elektrischen Überprüfung eines Rohrnetzes auf Leckagen und insbesondere auch auf die Vorsehung eines eine Schadstelle simulierenden Schalters wird auf die DE 195 19 650 C2 hingewiesen.

Der Erfindung liegt die Aufgabe zugrunde, ein Verfahren zu schaffen, das eine regelmäßige Aktualisierung des Rohrnetzplanes und damit eine zuverlässige Ortung einer Schadstelle ermöglicht.

Erfindungsgemäß wird diese Aufgabe durch die Merkmale des Anspruchs 1 gelöst. Der Unteranspruch gibt eine bevorzugte Ausgestaltung der Erfindung wieder.

Die Erfindung schlägt also vor, einen den Widerstand des Sensordrahtes zum Rohr herabsetzenden Schalters an einem definierten Ort vorzusehen, bei dessen Betätigung der Widerstand zwischen dem Rohr und dem Sensordraht herunter gesetzt wird. Der Schalter wird in regelmäßigen Zeitabständen betätigt, der Widerstand bzw. die Laufzeit eines Impulses, der auf den Sensordraht aufgegeben worden ist, wird bei betätigtem Schalter gemessen. Sodann wird der gemessene Widerstand bzw. wird die gemessene Laufzeit mit dem zuvor ermittelten Widerstand der Laufzeit verglichen. Bei Feststellen einer eine Toleranzschwelle übersteigenden Änderung des Widerstandes bzw. der Laufzeit gegenüber der vorangegangenen Messung wird die Ursache der Änderung ermittelt. Wenn es sich dabei um eine gewollte Änderung, beispielsweise durch die einen weiteren Hausanschluss handelt, wird dieser weitere Hausanschluss in dem Rohrnetzplan vermerkt. Handelt es sich dabei jedoch um eine nicht gewollte, etwa auf einer Manipulation an der Messschleife beruhenden Änderung, wird diese beseitigt. Schließlich wird der Rohrnetzplan unter Vermerken eines etwaigen weiteren Hausanschlusses oder einen sonstigen gewollten Änderung korrigiert.

Eine Prüfung auf eine erforderliche Aktualisierung durch das hier vorgeschlagene Verfahren sollte etwa wöchentlich oder monatlich erfolgen.

Bei Vorsehung einer Mehrzahl von Schaltern an unterschiedlichen Orten ermöglicht dies eine besonders genaue zuverlässige und schnelle Einkreisung einer Schadstelle auf der Grundlage des korrigierten Rohrnetzplans.

## Patentansprüche

1. Verfahren zum Aktualisieren eines Rohrnetzplanes, insbesondere Fernwärmenetzplanes, also eines Planes, in dem das Netz von ein Fluid führenden, mit einer thermischen Isolation umgebenen und mit wenigstens einem eine Messstrecke bildenden Sensordraht versehenen Rohren aufgezeichnet ist, wobei über den Sensordraht eine Leckstelle im Rohr mittels einer Messung des Widerstandes des Sensordrahtes zum Rohr, der Spannungsverhältnisse oder mittels Messung der Laufzeit eines auf den Sensordraht aufgegebenen und von einer Schadstelle reflektierten Impulses ermittelt werden kann,
**gekennzeichnet durch** die Schritte:
- Vorsehen eines bei Betätigung den Widerstand des Sensordrahtes zum Rohr herabsetzenden Schalters an einem definierten Ort der Messstrecke,
- Betätigen des Schalters in regelmäßigen Zeitabständen,
- Messen des Widerstandes bzw. der Spannungsverhältnisse und/ oder Messen der Laufzeit eines auf den Sensordraht aufgegebenen Impulses bei betätigtem Schalter,
- Feststellen einer eine Toleranzschwelle übersteigenden Änderung des Widerstandwerts bzw. der Laufzeit zwischen aufeinanderfolgenden Messungen,
- Ermitteln der Ursache der festgestellten Änderung,
- Beseitigen einer auf einem Fehler beruhenden Ursache der Änderung, und
- Aktualisieren des Rohrnetzplanes unter Vermerken einer nicht zu beseitigenden Ursache.

2. Verfahren nach Anspruch 1, **dadurch gekennzeichnet, dass** über die Messstrecke eine Mehrzahl von Schaltern vorgesehen ist.
